# EUROPEAN PATENT APPLICATION

(11) **EP 4 316 679 A1**
(43) Date of publication of application: **07.02.2024**
(21) Application number: 22798815.1
(22) Date of filing: 14.02.2022
(51) Int. Cl.: B21D 5/01, B21D 22/30, C21D 9/00

(54) **PRESS-FORMING METHOD AND METHOD FOR EVALUATING SHAPE OF PRESS-FORMED ARTICLE**

(30) Priority: 06.05.2021 JP 2021078342
(71) Applicant: JFE Steel Corporation, Tokyo 100-0011 (JP)
(72) Inventor: NAKAMOTO, Taira, Tokyo 100-0011 (JP); ISHIWATARI, Akinobu, Tokyo 100-0011 (JP)
(74) Representative: Hoffmann Eitle
(86) International application number: PCT/JP2022/005701
(87) International publication number: WO 2022/234708

(57) **Abstract**

A press forming method reduces a time for chronological shape variation of a press formed part 1 after occurrence of springback at a moment when the press formed part is released from a die, and the method includes a press forming step S1 of forming the press formed part 1 by press forming by using the die, a die release step S3 of releasing the press formed part 1 from the die, a die fitting step S5 after die release of fitting the press formed part 1 released from the die into the die and securing the press formed part 1 in conformity with a shape at the bottom dead center of forming, a heating and holding step S7 of heating the press formed part 1 fitted into the die to a predetermined temperature A higher than room temperature and holding the press formed part 1 at the predetermined temperature A for a predetermined time period of less than 30 minutes, and a cooling step S9 of cooling the press formed part 1 heated and held, to a predetermined temperature B (B < A).

## Description

### Field

The present invention relates to a press forming method, and a shape evaluation method for a press formed part, and more particularly to a press forming method and a shape evaluation method for a press formed part, for a press formed part whose shape changes as time elapses, after springback at a moment when the press formed part is released from a die.

### Background

Press forming is a method capable of manufacturing metal parts at low cost in a short time, and is used for manufacturing many automotive parts. In recent years, in order to achieve both of improvement in collision safety of an automobile and weight reduction of automotive body, a metal sheet having higher strength has been subjected to press forming to obtain automotive parts.

One of the main problems in press forming of a metal sheet having high strength is deterioration of dimensional accuracy due to springback. The springback refers to a phenomenon in which a residual stress generated in a press formed part obtained by deforming a metal sheet with a die by press forming becomes a driving force and thereby the press formed part released from the die instantaneously returns to the shape of the metal sheet before press forming, like a spring.

The residual stress of the press formed part generated by the press forming increases as the metal sheet (e.g., high-tensile steel sheet) has higher strength, and therefore, the shape variation of the press formed part due to the springback also increases. Therefore, it is more difficult to keep the shape of the press formed part after springback within predetermined dimensions, as the metal sheet has higher strength. Therefore, technologies for accurate prediction of shape variation in the press formed part due to the springback have been developed.

For the prediction of the shape variation in the press formed part due to springback, a press forming simulation by a finite element method is generally used. The procedure of the press forming simulation includes a first step (e.g., Patent Literature 1) of performing press forming analysis in the process of press forming of a metal sheet to the bottom dead center of forming by using a die and predicting a residual stress generated in a press formed part, and a second stage (e.g., Patent Literature 2) of performing springback analysis in which the shape of the press formed part removed from the die varies due to the springback and predicting the shape of the press formed part in which a moment of force and the residual stress are balanced.

### Citation List

### Patent Literature

Patent Literature 1: JP 5795151 B2
Patent Literature 2: JP 5866892 B2
Patent Literature 3: JP 2013-113144 A

### Summary

### Technical Problem

However, upon comparison between the shapes of the press formed parts predicted by the press forming simulation and the shapes of the press formed parts actually press-formed, the inventors have found that there is a press formed part that has low shape prediction accuracy by the press forming simulation.

Therefore, the press formed part that has low shape prediction accuracy in the press forming simulation and the cause of the low shape prediction accuracy are investigated, and the inventors have found that, for example, the shape of a press formed part having a bent portion obtained by bending a metal sheet varies between immediately after press-forming (immediately after springback due to die release) and after a lapse of several days.

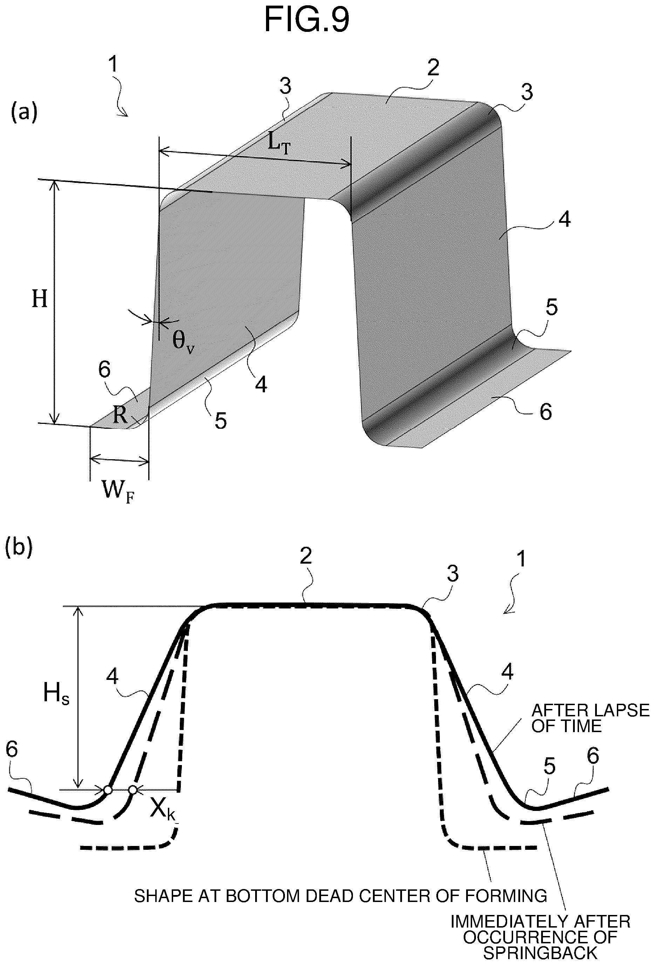

An example of the chronological shape variation of the press formed part is illustrated in FIG. 9. As illustrated in FIG. 9(b), in a press formed part 1 having a hat-shaped cross section, which is illustrated in FIG. 9(a) as an example, springback occurs at the moment when the press formed part 1 is released from a die, and shape variation (broken line in FIG. 9(b)) occurs in which wall opening of a side wall portion 4 increases as compared with the shape at the bottom dead center of forming (dotted line in FIG. 9(b)). However, even after the springback, the shape variation occurs in which the wall opening of the side wall portion 4 further increases as time elapses (solid line in FIG. 9(b)).

Such a chronological shape variation of the press formed part after occurrence of springback seems to be similar to a phenomenon (e.g., Patent Literature 3) in which a structural member continuously subjected to a high external force gradually varies in shape as in a creep phenomenon, but such a phenomenon as described above has not been known that is caused in the press formed part to which no external press load is applied.

Therefore, it is impossible to further reduce the shape variation of the press formed part after springback only by a method of using a die designed in consideration of the shape variation due to the springback or a method of specifying a portion contributing to the springback to take measures to reduce the springback. Furthermore, in a case where a press formed part is fabricated with other parts, the shape variation of the press formed part with time may cause a problem in the next step. Therefore, it has been found that some measures need to be taken for the chronological shape variation of the press formed part after springback.

For measures against the chronological shape variation of the press formed part, leaving the press formed part in which springback has occurred after die release to have a state of very little change in shape variation, before fabricating with other parts in the next step can be considered. However, as a result of investigating a time period required to have the state of very little change in shape variation, it has been found that a long time such as at least 30 minutes or more is required. The result leads to restriction in time in process steps, for example, the press formed part cannot be supplied to the next step for fabrication with other parts, immediately after being released from the die, or it takes time to adjust the die based on a shape measurement result of the press formed part. For this reason, it has been desired to promptly cause the chronological shape variation of the press formed part in which springback has occurred after die release.

The present invention has been made in view of the above problems, and an object of the present invention is to provide a press forming method to reduce a time for chronological shape variation of a press formed part after occurrence of springback due to press-forming and to reduce the chronological shape variation of the press formed part after occurrence of springback, and a shape evaluation method for a press formed part to evaluate the shape of the press formed part by reducing a time for shape variation of the press formed part before the press formed part is fabricated with other parts in the next step.

### Solution to Problem

A press forming method according to a first aspect of the present invention reduces a time for chronological shape variation of a press formed part after occurrence of springback at a moment when the press formed part is released from a die, and includes: a press forming step of forming the press formed part by press forming with a metal sheet by using the die; a die release step of releasing the press formed part formed by press forming, from the die; a die fitting step after die release of fitting the press formed part released from the die into the die and securing the press formed part in conformity with a shape at the bottom dead center of forming; a heating and holding step of heating the press formed part fitted into the die to a predetermined temperature A higher than room temperature and holding the press formed part at the predetermined temperature A for a predetermined time period of less than 30 minutes; and a cooling step of cooling the press formed part heated and held, to a predetermined temperature B (B < A).

A press forming method according to a second aspect of the present invention reduces a time for chronological shape variation of a press formed part after occurrence of springback at a moment when the press formed part is released from a die, and includes: a press forming step of forming the press formed part by press forming with a metal sheet by using the die; a die release step of releasing the press formed part formed by press forming, from the die; a jig fitting step after die release of fitting whole or part of the press formed part released from the die, to a jig configured to hold the press formed part in a preset predetermined shape, including another die having a same shape as that of the die, and securing the whole or part of the press formed part in conformity with the predetermined shape; a heating and holding step of heating the press formed part fitted to the jig to a predetermined temperature A higher than room temperature and holding the press formed part at the predetermined temperature A for a predetermined time period of less than 30 minutes; and a cooling step of cooling the press formed part heated and held, to a predetermined temperature B (B < A) .

A press forming method according to a third aspect of the present invention reduces a time for chronological shape variation of a press formed part after occurrence of springback at a moment when the press formed part is released from a die, and includes: a press forming step of forming the press formed part by press forming with a metal sheet by using the die; a die release step of releasing the press formed part formed by press forming, from the die; a jig fitting step after die release of predicting a shape of the press formed part after occurrence of springback due to die release, by measurement or calculation, fitting whole or part of the press formed part released from the die, to a jig configured to hold the press formed part in a same shape as the shape after springback due to die release, and securing the whole or part of the press formed part in conformity with the shape after springback; a heating and holding step of heating the press formed part fitted to the jig to a predetermined temperature A higher than room temperature and holding the press formed part at the predetermined temperature A for a predetermined time period of less than 30 minutes; and a cooling step of cooling the press formed part heated and held, to a predetermined temperature B (B < A).

A press forming method according to a fourth aspect of the present invention reduces a time for chronological shape variation of a press formed part after occurrence of springback at a moment when the press formed part is released from a die, and includes: a press forming step of forming the press formed part by press forming with a metal sheet by using the die; a die release step of releasing the press formed part formed by press forming, from the die; a heating and holding step after die release of heating the press formed part released from the die to a predetermined temperature A higher than room temperature and holding the press formed part at the predetermined temperature A for a predetermined time period of less than 30 minutes; and a cooling step of cooling the press formed part heated and held, to a predetermined temperature B (B < A) .

The predetermined temperature A may be 130°C to 150°C, and the predetermined time period may be one minute or more and three minutes or less.

A shape evaluation method for a press formed part according to the present invention evaluates a shape of the press formed part to be fabricated with other parts after press-forming, and includes: a press forming step of pressing a metal sheet to the press formed part by using a die; a die release step of releasing the press formed part formed by press forming, from the die; a heating and holding step after die release of heating the press formed part released from the die to a predetermined temperature A higher than room temperature and holding the press formed part at the predetermined temperature A for a predetermined time period of less than 30 minutes; a cooling step of cooling the press formed part heated and held to a predetermined temperature B (B < A); a shape measurement step of measuring a shape of the press formed part after cooling; and a shape determination step of determining to subject the press formed part to a fabricating process, when the measured shape of the press formed part is within a preset predetermined range.

The predetermined temperature A may be 130°C to 150°C, and the predetermined time period may be one minute or more and three minutes or less.

### Advantageous Effects of Invention

According to the present invention, it is possible to reduce the time for relaxation of the residual stress in the press formed part compared with the time for relaxation of the residual stress only at room temperature. Therefore, a time for the chronological shape variation of the press formed part after the springback due to further die release can be reduced and further, the shape variation after the further die release can be reduced.

In addition, according to the present invention, it is possible to reduce the time for the chronological shape variation of the press formed part, and efficiently avoid failure in the next step. As described above, according to the present invention, it is possible to relax the restriction in time on the process steps to improve manufacturing of the press formed part and productivity in fabricating.

### Brief Description of Drawings

FIG. 1 is a flowchart illustrating process steps of a press forming method according to a first embodiment of the present invention.
FIG. 2 illustrates an example of the results of measuring temporal change of an amount Xₖ of change in wall opening of a side wall portion of a press formed part immediately after springback occurs.
FIG. 3 illustrates an example of the results (•) of determining a necessary holding time at each predetermined temperature A required to have approximately the same amount of change in wall opening as the amount of change (o) in wall opening at room temperature, when the press formed part is heated to each predetermined temperature A.
FIG. 4 is a graph illustrating a heating time taken for the press formed part to rise to each predetermined temperature A, a holding time required for the press formed part to have sufficient shape variation at each predetermined temperature A, and a cooling time taken for the press formed part to fall from each predetermined temperature A to the room temperature (25°C), the press formed part being charged into a high-temperature furnace and heated and held at each predetermined temperature A.
FIG. 5 is a flowchart illustrating process steps of a press forming method according to another aspect of the first embodiment of the present invention.
FIG. 6 is a flowchart illustrating process steps of a press forming method according to a second embodiment of the present invention.
FIG. 7 is a flowchart illustrating process steps of a press forming method according to a third embodiment of the present invention.
FIG. 8 is a flowchart illustrating process steps of a shape evaluation method for a press formed part according to a fourth embodiment of the present invention.
FIG. 9 illustrates diagrams of a press formed part having a hat-shaped cross section, serving as a target in the first to fourth embodiments and examples of the present invention ((a) perspective view, and (b) shape at the bottom dead center of forming, shape immediately after springback, and shape after lapse of time).

### Description of Embodiments

In order to solve the above-described problems, the inventors variously studied the cause of chronological shape variation, for a press formed part 1 having a hat-shaped cross section as illustrated in FIG. 9(a), in order to establish a method of reducing a time for the chronological shape variation of the press formed part in which springback has occurred after die release.

The inventors focused on a stress relaxation phenomenon in which a stress gradually relaxes and decreases with time, and have found that, even in the press formed part 1 immediately after springback, a residual stress gradually relaxes with time without being subjected to external force and the shape of the press formed part 1 changes to be balanced with a moment of force.

As described above, the phenomenon in which the shape of the press formed part changes without external force is not so well known so far, and the generation mechanism thereof is not clarified as well, unlike a creep phenomenon in which a structural member continuously receiving a high external press load gradually changes in shape. Meanwhile, in order to release the residual stress of a processed metal part, heat-treating called "straightening" is performed, and it is known that the shape of the metal part changes with the straightening.

Therefore, the inventors focused on the temperature, and studied the influence of the temperature on the phenomenon in which the residual stress relaxes gradually with time without external force in the press formed part after springback.

In this study, taking the press formed part 1 having a hat-shaped cross section as illustrated in FIG. 9(a) as an example, after the press formed part 1 press-formed to the bottom dead center of forming was released from the die, a shoulder part 3 of a punch was locally heated to 50°C, 150°C, or 200°C, and the chronological shape variation of the press formed part 1 was measured so as to be compared with the chronological shape variation of the press formed part 1 that is left at room temperature (25°C) without heating.

Here, the measurement was performed for wall opening of a side wall portion 4 as the shape variation of the press formed part 1 and on the basis of the press formed part 1 immediately after springback as illustrated in FIG. 9(b) to measure, as an amount Xₖ of change in wall opening of the side wall portion, an amount of change of the side wall portion 4 of the press formed part 1 in a width direction at a position located at a distance Hₛ extending from a top portion 2 in a press forming direction, after a lapse of time.

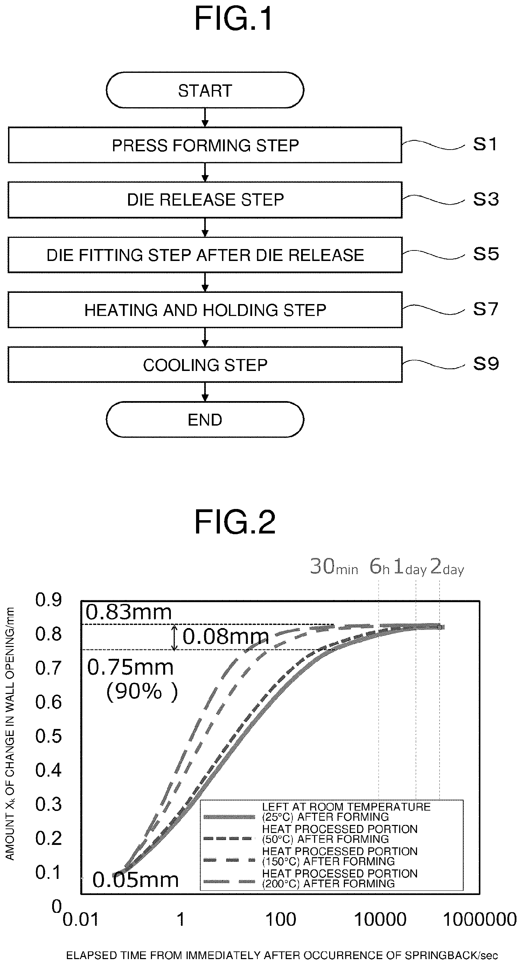

FIG. 2 illustrates the results of measuring the amount Xₖ of change in the wall opening of the side wall portion 4, in a period from immediately after springback occurs due to die release until two days have elapsed. As illustrated in FIG. 2, the amount Xₖ of change immediately after (less than 0.1 s) springback due to die release was 0.05 mm, and the amount Xₖ of change was increased while leaving the press formed part 1 at room temperature (25°C) without heating, and reached 0.75 mm when 30 minutes have elapsed. Thereafter, the amount Xₖ of change was gradually increased with time, and reached 0.83 mm when two days have elapsed, and was maintained substantially constant. Meanwhile, when the press formed part 1 was heated after being released from the die, the shape variation of the press formed part occurred in a shorter time as compared with the shape variation while the press formed part is left at room temperature (25°C) without heating. Furthermore, it was found that the shape variation occurs in a shorter time as the heating temperature is increased.

From this result, it was found that the time for the chronological shape variation of the press formed part can be reduced by heating the metal part to a temperature range of 50°C to 200°C. Note that the reason why the heating temperature is set to 200°C or lower is that even when the metal part is heated to 200°C or higher, the time required for the shape variation is not reduced, the heating time and the cooling time are increased, and restriction in time on the process is rather generated.

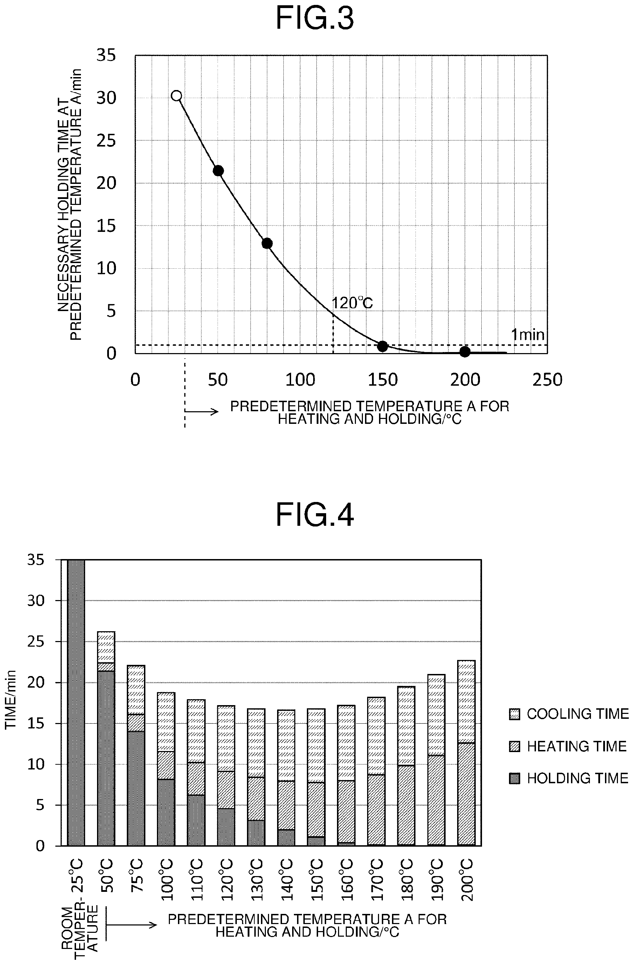

Furthermore, FIG. 3 illustrates the results of determining a necessary holding time at each temperature required to have the same amount Xₖ of change as an amount of change (= 0.75 mm) when the metal part is left for 30 minutes at room temperature upon heated to 50°C to 200°C. As illustrated in FIG. 3, the necessary holding time until reaching the amount Xₖ of change when the press formed part is left at room temperature (25°C) for 30 minutes was reduced as the temperature during heating was higher, and was less than five minutes at 120°C, starts to be saturated from around 150°C, and was less than one minute at 150°C or higher.

As described above, the higher a predetermined temperature A during heating is, the shorter the necessary holding time can be. However, when the press formed part charged into a high-temperature furnace maintained in a constant atmosphere is heated, the heating time required to heat the press formed part to the predetermined temperature A and the cooling time required to cool the press formed part from the predetermined temperature A to the room temperature (25°C) are increased as the predetermined temperature A for heating is higher.

FIG. 4 illustrates, as an example, the heating time to each predetermined temperature A, the holding time required for shape variation at each predetermined temperature A, and the cooling time from each predetermined temperature A to the room temperature (25°C), where the press formed part 1 using a steel sheet having a thickness of 1.5 mm as the metal sheet is charged into the high-temperature furnace at an ambient temperature of 250°C and heated. Here, the holding time at each predetermined temperature A was given from the results illustrated in FIG. 3.

From FIG. 4, it has been found that considering the heating time and the cooling time, a preferred range of the predetermined temperature, at which a time period (heating time + holding time + cooling time) required to charge the press formed part immediately after springback into the high-temperature furnace and relax the residual stress of the press formed part into a state of very little change in shape variation is minimized, is 130°C to 150°C.

Furthermore, the longest holding time is three minutes at 130°C and the shortest holding time is one minute at 150°C in a range of a predetermined temperature A of 130°C to 150°C. Therefore, it has been found that when the press formed part is held at a predetermined temperature A of 130°C to 150°C for one minute or more and three minutes or less, shape variation equivalent to that when the press formed part is left at room temperature (25°C) for 30 minutes or more can be obtained.

The present invention is based on the above findings, and will be described below in the first to fourth embodiments. Note that in the first to fourth embodiments, an example of the press formed part 1 will be described. In the example, as illustrated in FIG. 9, the press formed part 1 includes a top portion 2, the side wall portions 4, and flange portions 6 and has the hat-shaped cross section, and further, the press formed part 1 includes, as bend ridges, the shoulder parts 3 of a punch that connects the top portion 2 and the side wall portions 4, and shoulder parts 5 of a die that connects the side wall portions 4 and the flange portions 6.

### [First embodiment]

A press forming method according to the first embodiment of the present invention reduces the time for the chronological shape variation of the press formed part 1 (FIG. 9) in which springback has occurred at the moment of die release, and as illustrated in FIG. 1, the press forming method includes a press forming step S1, a die release step S3, a die fitting step S5 after die release, a heating and holding step S7, and a cooling step S9.

### <Press forming step>

The press forming step S1 is a step for press forming of the metal sheet into the press formed part 1 by using the die. The die used for the press forming step S1 is not particularly limited as long as the die includes, for example, a female die and a punch and is configured to perform press forming by relatively moving the die to the bottom dead center of forming toward the punch.

### <Die release step>

The die release step S3 is a step of releasing the press formed part 1 formed by press forming in the press forming step S1, from the die. In the press formed part 1 released from the die in the die release step S3, springback occurs at the moment of die release, and wall opening of the side wall portions 4 occurs as indicated by a broken line in FIG. 9(b).

### <Die fitting step after die release>

The die fitting step S5 after die release is a step of fitting the press formed part 1 released from the die in the die release step S3, into the die used for the press forming in the press forming step S1, and securing the press formed part 1 in conformity with the shape at the bottom dead center of forming. Now, the shape at the bottom dead center of forming represents the shape of the press formed part 1 at the bottom dead center of forming of the die used for the press forming step S1 (the same applies hereinafter.).

### <Heating and holding step>

The heating and holding step S7 is a step of heating the press formed part 1 fitted into the die to the predetermined temperature A higher than the room temperature, and holding the press formed part 1 at the predetermined temperature A for a predetermined time period of less than 30 minutes.

In the heating and holding step S7, as illustrated above in FIGS. 3 and 4, the predetermined temperature A for heating the press formed part 1 is preferably 130°C to 150°C, and the predetermined time period is preferably one minute or more and three minutes or less.

In addition, means for heating the press formed part 1 in the heating and holding step S7 is not particularly limited, and may be, for example, means for heating the press formed part 1 charged into the high-temperature furnace held at a constant ambient temperature, together with the die to which the press formed part 1 is secured, or means for heating the press formed part 1 secured to the die by using high frequency induction heating.

### <Cooling step>

The cooling step S9 is a step of cooling the press formed part 1 heated and held at the predetermined temperature A in the heating and holding step S7, to the room temperature. Note that the temperature of the press formed part 1 after cooling is not limited to the room temperature, and is preferably a predetermined temperature B (B < A) less than the predetermined temperature A for heating. The cooling method in the cooling step S9 may use any of natural air cooling and forced air cooling for active ventilation by using a cooling blower or the like, but the forced air cooling is preferably used because the cooling time can be reduced.

As described above, according to the press forming method of the present first embodiment, the press formed part 1 in which springback has occurred at the moment of die release is fitted into the die so as to be secured in conformity with the shape at the bottom dead center of forming, heated to the predetermined temperature A higher than the room temperature, and held for the predetermined time period of less than 30 minutes. Therefore, the residual stress in the press formed part 1 can be relaxed in a shorter time than that in a press forming method performed at room temperature. Furthermore, according to the press forming method of the present first embodiment, the chronological shape variation after occurrence of springback due to further die release of the press formed part 1 fitted into the die and heated and held, can be reduced.

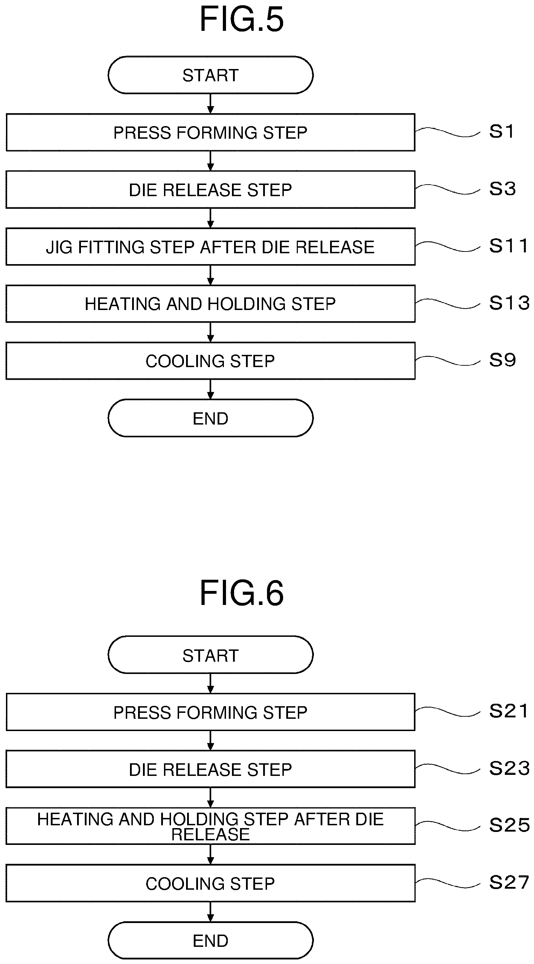

Note that in the press forming method according to the present first embodiment, the entire press formed part 1 has been secured in conformity with the shape at the bottom dead center of forming by using the die used for the press-forming of the press formed part 1 in the die fitting step S5 after die release. However, in another aspect of the press forming method according to the present first embodiment, instead of the die fitting step S5 after die release and the heating and holding step S7, a jig fitting step S11 after die release and a heating and holding step S13 may be included, as illustrated in FIG. 5.

### <Jig fitting step after die release>

The jig fitting step S11 after die release is a step of fitting whole or part of the press formed part 1 released from the die in the die release step S3, to a jig that is configured to hold the press formed part 1 in a preset predetermined shape, including another die having a shape the same as that of the die used for the press forming step, and securing whole or part of the press formed part 1 in conformity with the predetermined shape.

In addition, the preset predetermined shape preferably includes, not only the same shape as that of the die used for the press forming step, but also a target shape (shape defined as a product) of the press formed part 1, or an intermediate shape between the shape at the bottom dead center and the target shape, such as a shape after springback from the bottom dead center of forming.

Note that the shape after springback is preferably predicted by measuring or calculating the shape of the press formed part 1 after springback due to die release. In this case, whole or part of the press formed part 1 released from the die is fitted to the jig configured to hold the press formed part 1 in the same shape as the shape after springback due to die rerelease so that whole or part of the press formed part 1 is secured in conformity with the shape after springback.

In addition, to hold the press formed part 1 in the predetermined shape by using the jig, a jig that holds the entire press formed part 1 in the predetermined shape may be used, or a jig that holds part of the press formed part 1, for example, only the shoulder part 3 of a punch, in a predetermined shape may be used.

### <Heating and holding step>

The heating and holding step S13 is a step of heating the press formed part 1 fitted to the jig in the jig fitting step S11 after die release, to the predetermined temperature A higher than the room temperature and holding the press formed part 1 at the predetermined temperature A for the predetermined time period of less than 30 minutes.

As described above, in the another aspect of the press forming method according to the present first embodiment as well, the residual stress can be further relaxed, and therefore, the chronological shape variation after occurrence of springback requires a short time, and further, later shape variation can be suppressed.

Note that in the heating and holding step S13 according to another aspect of the present first embodiment, the predetermined temperature A for heating the press formed part 1 is preferably 130°C to 150°C, and the predetermined time period is preferably one minute or more and three minutes or less.

### [Second embodiment]

In an example, a press forming method according to the second embodiment of the present invention reduces the time for the chronological shape variation of the press formed part 1 after springback occurs at the moment when the press formed part 1 as illustrated in FIG. 9(a) is released from the die, and the press forming method includes a press forming step S21, a die release step S23, a heating and holding step S25 after die release, and a cooling step S27, as illustrated in FIG. 6. Here, the press forming step S21 and the die release step S23 are similar to the press forming step S1 and the die release step S3 of the first embodiment described above, and the description thereof will be omitted here, and therefore, the heating and holding step S25 after die release and the cooling step S27 will be described below.

### <Heating and holding step after die release>

The heating and holding step S25 after die release is a step of heating the press formed part 1 released from the die in the die release step S23, to the predetermined temperature A higher than the room temperature and holding the press formed part 1 at the predetermined temperature A for the predetermined time period of less than 30 minutes.

In the heating and holding step S25 after die release, holding the press formed part 1 at the predetermined temperature A for the predetermined time period can cause shape variation of the press formed part 1.

Note that the predetermined temperature A in the heating and holding step S25 after die release is preferably within the range of 130°C to 150°C, and the predetermined time period is preferably one minute or more and three minutes or less.

### <Cooling step>

The cooling step S27 is a step of cooling the press formed part 1 heated and held at the predetermined temperature A for the predetermined time period in the heating and holding step S25 after die release to the room temperature. The cooling method in the cooling step S27 may use any of natural air cooling and forced air cooling for active ventilation by using a cooling blower or the like, but the forced air cooling is preferably used because the cooling time can be reduced. Note that the temperature of the press formed part after cooling is not limited to the room temperature, and is preferably a predetermined temperature B (B < A) less than the predetermined temperature A for heating.

As described above, according to the press forming method of the present second embodiment, the press formed part is heated to the predetermined temperature A higher than the room temperature and held at the predetermined temperature A for the predetermined time period. Therefore, the chronological shape variation of the press formed part 1 due to stress relaxation can be caused in a shorter time than that caused at room temperature, before the press formed part 1 is subjected to a fabricating process. Accordingly, it is possible to relax the restriction in time on the process steps, such as waiting time for shape variation before the press formed part 1 is subjected to the fabricating process with other parts in the next step.

### [Third embodiment]

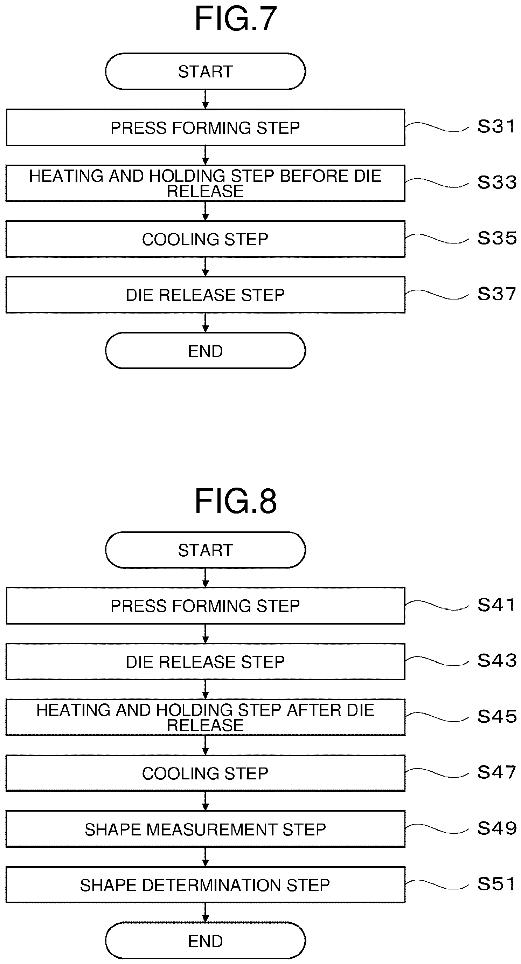

In an example, a press forming method according to the third embodiment of the present invention reduces the time for the chronological shape variation of the press formed part 1 after springback occurs at the moment when the press formed part 1 as illustrated in FIG. 9(a) is released from the die, and the press forming method includes a press forming step S31, a heating and holding step S33 before die release, a cooling step S35, and a die release step S37, as illustrated in FIG. 7. The press forming step S31 is similar to the press forming step S1 of the first embodiment described above, and therefore, the heating and holding step S33 before die release, the cooling step S35, and the die release step S37 will be described below.

### <Heating and holding step before die release>

The heating and holding step S33 before die release is a step of heating the press formed part 1 having formed by press forming by using the die in the press forming step S31 without being removed from the die, to the predetermined temperature A higher than the room temperature at the position of the bottom dead center of forming, and holding the press formed part 1 at the predetermined temperature A for the predetermined time period of less than 30 minutes.

### <Cooling step>

The cooling step S35 is a step of cooling the press formed part 1 heated and held in the heating and holding step S33 before die release, to the room temperature. In the cooling step S35, the press formed part 1 is cooled together with the die securing the press formed part 1 in conformity with the shape at the bottom dead center of forming. Note that the temperature of the press formed part 1 after cooling is not limited to the room temperature, and is preferably a predetermined temperature B (B < A) less than the predetermined temperature A for heating.

### <Die release step>

The die release step S37 is a step of releasing the press formed part 1 cooled in the cooling step S35 from the die.

According to the press forming method of the present third embodiment, the press formed part press-formed to the bottom dead center of forming is secured in conformity with the shape at the bottom dead center of forming without being released from the die, heated to the predetermined temperature A higher than the room temperature, and held for the predetermined time period of less than 30 minutes. Accordingly, as compared with the press formed part held in the die at room temperature, the residual stress of the press formed part can be relaxed even when the time for holding the press formed part in the die is reduced, and the chronological shape variation of the press formed part after occurrence of springback due to die release can be sufficiently reduced.

### [Fourth embodiment]

In an example, a shape evaluation method for a press formed part according to the fourth embodiment of the present invention evaluates the shape of the press formed part 1 as illustrated in FIG. 9(a), to be fabricated with other parts after press forming, before the press formed part 1 is subjected to a fabricating process, and the shape evaluation method includes a press forming step S41, a die release step S43, a heating and holding step S45 after die release, a cooling step S47, a shape measurement step S49, and a shape determination step S51, as illustrated in FIG. 8.

Here, the press forming step S41 and the die release step S43 are similar to the press forming step S1 and the die release step S3 of the first embodiment described above, and the heating and holding step S45 after die release and the cooling step S47 are similar to the heating and holding step S25 after die release and the cooling step S27 of the second embodiment described above, and therefore, the shape measurement step S49 and the shape determination step S51 will be described below.

### <Shape measurement step>

The shape measurement step S49 is a step of measuring the shape of the press formed part 1 after being cooled in the cooling step S47.

The reason why the shape of the press formed part 1 is measured after shape variation of the press formed part 1 heated to the predetermined temperature A and held for the predetermined time period is that the residual stress in the press formed part 1 heated to the predetermined temperature A higher than the room temperature is relaxed in a shorter time than that at the room temperature so that the shape variation due to the stress relaxation is quickly caused.

### <Shape determination step>

The shape determination step S51 is a step of determining that the press formed part 1 is subjected to the fabricating process when the shape of the press formed part 1 measured in the shape measurement step S49 falls within a preset predetermined range.

The preset predetermined range in the shape determination step S51 is preferably set within an appropriate range that does not cause problems during fabricating with other parts.

As described above, the shape evaluation method for a press formed part according to the present fourth embodiment includes releasing the press formed part 1 formed by press forming from the die, heating the press formed part 1 to the predetermined temperature A higher than the room temperature and holding the press formed part 1 for the predetermined time period, cooling the press formed part 1 in which sufficient shape variation is caused due to stress relaxation with time in a shorter time than that at the room temperature, to the predetermined temperature B (B < A), measuring the shape of the press formed part 1, and determining the press formed part 1 to be subjected to the next process when the measured shape of the press formed part 1 is within the preset predetermined range. Therefore, it is possible to relax the restriction in time on the process, and further, prevent failure in the next step due to the occurrence of shape variation of the press formed part 1 in a period from the press forming to fabricating.

Note that the press forming method and the shape evaluation method for a press formed part according to the present invention do not particularly limit the shape and type of the metal sheet used as a blank or the press formed part, and are more effectively applied to an automotive part formed by press forming by using a metal sheet providing a high residual stress to the press formed part.

Specifically, the blank preferably has a tensile strength of 440 to 1470 MPa-class. A metal sheet having a tensile strength of less than 440 MPa-class has a low residual stress inside the press formed part, with relatively small influence of temporal change, and thus, application of the metal sheet has little advantage in the present invention. However, parts having a low rigidity, such as an automotive outer panel is apt to cause shape variation due to a change in residual stress, and thus, the present invention is preferably applied even to the metal sheet having a tensile strength of less than 440 MPa-class.

Meanwhile, although the upper limit of the tensile strength of the metal sheet is not particularly specified, a metal sheet exceeding 1470 MPa-class has poor ductility. Therefore, for example, when targeting the press formed part 1, fracture occurs in the shoulder part 3 of a punch and the shoulder part 5 of a die in the process of press-forming, and press forming cannot be performed in some cases.

In addition, in the present invention, the shape of the press formed part is not limited to the press formed part 1 having the hat-shaped cross section as illustrated in FIG. 9. For example, the present invention can be preferably applied to a press formed part with a shape having a portion where the residual stress is high, such as a press formed part having a Z-shaped cross section, U-shaped cross section, or L-shaped cross section.

For the type of the press formed part, it is preferable to apply the present invention to an automotive part such as outer panel parts including a door, roof, and a hood having low rigidity, or body frame parts such as an A pillar, B pillar, roof rail, side rail, front side member, rear side member, and cross member using a metal sheet having high strength.

### [Example]

An experiment for confirming the function effects of the press forming method according to the present invention was conducted, and the results thereof will be described below.

In the experiment, first, a metal sheet having mechanical properties shown in Table 1 below was used, and as illustrated in FIG. 9(a), the press formed part 1 having a hat-shaped cross section and including the top portion 2, the side wall portions 4, and the flange portions 6 was used as a target. In the shape at the bottom dead center of forming of the press formed part 1, the width L_{T} of the top portion 2 was 50 mm, a forming height H was 50 mm, the inclination angle θᵥ of each of the side wall portions 4 was 3°, the curvature radius and the bending angle of each of the shoulder parts 3 of a punch were 5 mm and 95°, and the curvature radius R and the bending angle of each of the shoulder parts 5 of a die were 5 mm and 95°.

**Table 1**

| | Sheet thickness/mm | Yield strength /MPa | Tensile strength/MPa | Elongation /MPa |
|---|---|---|---|---|
| Metal sheet | 1.3 | 880 | 1210 | 13 |

Then, the chronological shape variation of the press formed part 1 after occurrence of springback due to die release was measured, for each of cases as invention examples, that is, a case where the press formed part 1 in which springback has occurred after die release is returned to the die, secured in the conformity with the shape at the bottom dead center of forming, and held at the predetermined temperature A for the predetermined time period, and a case where the press formed part 1 press-formed to the bottom dead center of forming is held at the predetermined temperature A for the predetermined time period in the die without being released from the die.

In addition, the chronological shape variation of the press formed part 1 after occurrence of springback due to die release was measured as well, for a case as a conventional example where the press formed part 1 press-formed to the bottom dead center of forming was released from the die without being held in the die. Furthermore, the chronological shape variation of the press formed part 1 after occurrence of springback due to die release was measured for each of cases as comparative examples where the press formed part 1 in which springback has occurred after die release was returned to the die, secured in conformity with the shape at the bottom dead center of forming, and held at room temperature (25°C) for the predetermined time period, and where the press formed part 1 was held at room temperature (25°C) for the predetermined time period in the die without being released from the die.

As illustrated in FIG. 9(b), as the chronological shape variation of the press formed part 1, a distance (amount Xₖ of change in the wall opening of the side wall portion 4) in the width direction at a position located at the distance Hₛ = 40 mm extending from the top portion 2 in the press forming direction was measured, where a longitudinal center of the top portion 2 of the press formed part 1 was made to coincide with the shape at the bottom dead center of forming.

Table 2 illustrates the results of measuring the amount Xₖ of change in the wall opening of the side wall portion 4 immediately after press forming of the press formed part 1 (immediately after occurrence of springback after die release) and at each elapsed time from die release of the press formed part 1 after being held in the die for the predetermined time period. Here, the amounts Xₖ of change shown in Table 2 are indicated based on the shape of the press formed part 1 immediately after occurrence of springback after die release.

**Table 2**

| | Amount Xₖ of change in wall opening of side wall portion/mm | | | | Time required until Xₖ of change in wall opening = 0.3mm | Time required until Xₖ of change in wall opening = 0.5mm |
|---|---|---|---|---|---|---|
| | Immediately after press forming | Elapsed time from die release | | | | |
| | | After 15 minutes | After 30 minutes | After 2 days | | |
| Conventional example | 0 | - | - | 1.7 | - | - |
| Comparative Example 1 | 0 | 0.2*¹ | 0.3*¹ | 0.5 | 30 minutes | 2 days |
| Invention Example 1 | 0 | 0.3*¹ | 0.5*¹ | 0.5 | 15 minutes | 30 minutes |

| | | | | | | |
|---|---|---|---|---|---|---|
| ***1 Press formed part is once removed from die to measure amount Xₖ of change, and then returned to die again and held** | | | | | | |

In the conventional example, the press formed part 1 press-formed to the bottom dead center of forming was released from the die and left at room temperature. The amount Xₖ of change of the side wall portion 4 was 1.7 mm after two days from immediately after press forming (immediately after occurrence of springback after die release).

In Comparative Example 1, the press formed part 1 in which springback has occurred after the first die release was returned to the die, held at room temperature, and then released from the die again, and the press formed part 1 was further returned to the die, in a repetitive manner. The amount Xₖ of change of the side wall portion 4 was 0.2 mm after 15 minutes from the first die release, and 0.3 mm after 30 minutes, increased with time, and became constant at 0.5 mm after two days. Then, these amounts of change were reduced, as compared with the amount Xₖ of change (= 1.7 mm) in the conventional example.

In Invention Example 1, the press formed part 1 in which springback has occurred after the first die release was returned to the die, heated to 150°C for six minutes in the furnace, held at 150°C for one minute, then taken out from the furnace, cooled to the room temperature by forced air cooling for eight minutes, then released from the die again, and the press formed part 1 was returned to the die, and heated, held, and cooled repeatedly. The amount Xₖ of change of the side wall portion 4 was 0.3 mm after 15 minutes from the first die release, and 0.5 mm after 30 minutes, and became substantially constant.

As described above, a time required from the first die release until the amounts Xₖ of change in wall opening reached 0.3 mm and 0.5 mm was as short as 15 minutes and 30 minutes, respectively, in Invention Example 1, whereas the amounts Xₖ of change was as long as 30 minutes and two days, respectively, in Comparative Example 1. From this, it was shown that the chronological shape variation can be caused in a short time, as compared with holding the press formed part 1 at room temperature, by returning the press formed part 1 in which springback has occurred after die release to the die, heating the press formed part 1 to the predetermined temperature A, and holding the press formed part 1 for the predetermined time period of less than 30 minutes.

Furthermore, in Invention Example 1, the amount Xₖ of change after two days from the first die release was 0.5 mm, which was reduced relative to that in the conventional example.

Table 3 illustrates the results of measuring the amount Xₖ of change in wall opening after the press formed part 1 press-formed to the bottom dead center of forming was released after being held in the die for the predetermined time period. Here, the amounts Xₖ of change shown in Table 3 are indicated based on the shape of the press formed part 1 after occurrence of springback from the bottom dead center of forming.

**Table 3**

| | Amount Xₖ of change in wall opening of side wall portion/mm | | | | Time required until Xₖ of change in wall opening = 0.6mm | Time required until Xₖ of change in wall opening = 1.0mm |
|---|---|---|---|---|---|---|
| | Immediately after press forming | Holding time in die | | | | |
| | | 15 minutes | 30 minutes | 2 days | | |
| Conventional example | 0 | - | - | 1.7 | - | - |
| Comparative Example 2 | -*2 | 0.3*¹ | 0.6*¹ | 1.0 | 30 minutes | 2 days |
| Invention Example 2 | | 0.6*¹ | 1.0*¹ | 1.0 | 15 minutes | 30 minutes |

| | | | | | | |
|---|---|---|---|---|---|---|
| ***1 Press formed part is once removed from die to measure amount Xk of change, and then returned to die again and held** ***2 Not be measured because of press formed part held in die** | | | | | | |

In Comparative Example 2, the press formed part 1 formed by press forming was kept held in the die at room temperature (25°C) and then released from the die. The amount Xₖ of change was 0.3 mm immediately after the press formed part 1 was released from the die after being held in the die for 15 minutes, and then the amount of change was Xₖ = 0.6 mm immediately after the press formed part 1 having been returned to the die again before 15 minutes was released from the die again (a total holding time in the die was 30 minutes), and the amount of change was Xₖ = 1.0 mm immediately after the press formed part 1 was released from the die after two days from further returning of the press formed part 1 to the die, any of the amount of change was reduced relative to the amount Xₖ of change (= 1.7 mm) in the conventional example.

In Invention Example 2, the press formed part 1 was heated after press forming up to 150°C over six minutes by induction heating, held at 150°C for one minute, and then taken out from the furnace and subjected to forced air cooling for eight minutes, and then released from the die. After the amount Xₖ of change was measured, the press formed part 1 is further returned to the die, and heated, held, and cooled repeatedly. In Invention Example 2, the amount Xₖ of change was 0.6 mm immediately after the press formed part 1 heated, held, and cooled in the die for 15 minutes was released from the die, the amount of change was 1.0 mm immediately after the press formed part 1 returned to the die again, and further heated, held, and cooled for 15 minutes (a total holding time in the die was 30 minutes) was released, and further the amount of change was finally became constant at 1.0 mm immediately after the press formed part 1 further returned to the die again and held in the die at room temperature for two days is released from the die.

Therefore, in Invention Example 2, the amount Xₖ of change after two days from the press forming was significantly reduced as compared with the conventional example (1.7 mm). Furthermore, in Invention Example 2, the total holding time in the die required for the amount Xₖ of change = 0.6 mm and 1.0 mm were 15 minutes and 30 minutes, respectively, in the case of Invention Example 2, and it was shown that the total holding time in the die can be reduced as compared with 30 minutes and two days in Comparative Example 2.

### Industrial Applicability

According to the present invention, it is possible to provide the press forming method to reduce the time for chronological shape variation of the press formed part after occurrence of springback due to press-forming and to reduce the chronological shape variation of the press formed part after occurrence of springback, and the shape evaluation method for a press formed part to evaluate the shape of the press formed part by reducing the time for shape variation of the press formed part before the press formed part is fabricated with other parts in the next step.

### Reference Signs List

- 1: PRESS FORMED PART
- 2: TOP PORTION
- 3: SHOULDER PART OF PUNCH
- 4: SIDE WALL PORTION
- 5: SHOULDER PART OF DIE
- 6: FLANGE PORTION

## Claims

1. A press forming method for reducing a time for chronological shape variation of a press formed part after occurrence of springback at a moment when the press formed part is released from a die, the method comprising:
a press forming step of forming the press formed part by press forming with a metal sheet by using the die;
a die release step of releasing the press formed part formed by press forming, from the die;
a die fitting step after die release of fitting the press formed part released from the die into the die and securing the press formed part in conformity with a shape at the bottom dead center of forming;
a heating and holding step of heating the press formed part fitted into the die to a predetermined temperature A higher than room temperature and holding the press formed part at the predetermined temperature A for a predetermined time period of less than 30 minutes; and
a cooling step of cooling the press formed part heated and held, to a predetermined temperature B (B < A).

2. A press forming method for reducing a time for chronological shape variation of a press formed part after occurrence of springback at a moment when the press formed part is released from a die, the method comprising:
a press forming step of forming the press formed part by press forming with a metal sheet by using the die;
a die release step of releasing the press formed part formed by press forming, from the die;
a jig fitting step after die release of fitting whole or part of the press formed part released from the die, to a jig configured to hold the press formed part in a preset predetermined shape, including another die having a same shape as that of the die, and securing the whole or part of the press formed part in conformity with the predetermined shape;
a heating and holding step of heating the press formed part fitted to the jig to a predetermined temperature A higher than room temperature and holding the press formed part at the predetermined temperature A for a predetermined time period of less than 30 minutes; and
a cooling step of cooling the press formed part heated and held, to a predetermined temperature B (B < A).

3. A press forming method for reducing a time for chronological shape variation of a press formed part after occurrence of springback at a moment when the press formed part is released from a die, the method comprising:
a press forming step of forming the press formed part by press forming with a metal sheet by using the die;
a die release step of releasing the press formed part formed by press forming, from the die;
a jig fitting step after die release of predicting a shape of the press formed part after occurrence of springback due to die release, by measurement or calculation, fitting whole or part of the press formed part released from the die, to a jig configured to hold the press formed part in a same shape as the shape after springback due to die release, and securing the whole or part of the press formed part in conformity with the shape after springback;
a heating and holding step of heating the press formed part fitted to the jig to a predetermined temperature A higher than room temperature and holding the press formed part at the predetermined temperature A for a predetermined time period of less than 30 minutes; and
a cooling step of cooling the press formed part heated and held, to a predetermined temperature B (B < A).

4. A press forming method for reducing a time for chronological shape variation of a press formed part after occurrence of springback at a moment when the press formed part is released from a die, the method comprising:
a press forming step of forming the press formed part by press forming with a metal sheet by using the die;
a die release step of releasing the press formed part formed by press forming, from the die;
a heating and holding step after die release of heating the press formed part released from the die to a predetermined temperature A higher than room temperature and holding the press formed part at the predetermined temperature A for a predetermined time period of less than 30 minutes; and
a cooling step of cooling the press formed part heated and held, to a predetermined temperature B (B < A).

5. The press forming method according to any of claims 1 to 4, wherein the predetermined temperature A is 130°C to 150°C, and the predetermined time period is one minute or more and three minutes or less.

6. A shape evaluation method for a press formed part, the method evaluating a shape of the press formed part to be fabricated with other parts after press-forming, the method comprising:
a press forming step of pressing a metal sheet to the press formed part by using a die;
a die release step of releasing the press formed part formed by press forming, from the die;
a heating and holding step after die release of heating the press formed part released from the die to a predetermined temperature A higher than room temperature and holding the press formed part at the predetermined temperature A for a predetermined time period of less than 30 minutes;
a cooling step of cooling the press formed part heated and held to a predetermined temperature B (B < A);
a shape measurement step of measuring a shape of the press formed part after cooling; and
a shape determination step of determining to subject the press formed part to a fabricating process, when the measured shape of the press formed part is within a preset predetermined range.

7. The shape evaluation method for a press formed part according to claim 6, wherein the predetermined temperature A is 130°C to 150°C, and the predetermined time period is one minute or more and three minutes or less.
